# EUROPÄISCHE PATENTSCHRIFT

(11) **EP 3 597 418 B1**
(45) Veröffentlichungstag und Bekanntmachung des Hinweises auf die Patenterteilung: **16.03.2022**
(21) Anmeldenummer: 19186449.5
(22) Anmeldetag: 16.07.2019
(51) Int. Cl.: B30B 15/32, B30B 11/08

(54) **WEICHE EINES TABLETTENABLAUFS EINER TABLETTENPRESSE**
SWITCH FOR TABLETS' DISCHARGE OF A TABLET PRESS
AIGUILLAGE D'UN DISPOSITIF DE DÉCHARGEMENT DE COMPRIMÉS D'UNE PRESSE À COMPRIMÉS

(30) Priorität: 18.07.2018 DE 102018117351
(43) Veröffentlichungstag der Anmeldung: 22.01.2020
(73) Patentinhaber: Fette Compacting GmbH, 21493 Schwarzenbek (DE)
(72) Erfinder: Kolbe, Sven, 21514 Büchen (DE); Mallon, Stefan, 21527 Kollow (DE); Meißner, Friedrich, 21493 Schwarzenbek (DE); Naeve, Jan, 23899 Kehrsen (DE); Lüdemann, Stefan, 21035 Hamburg (DE)
(74) Vertreter: Hauck Patentanwaltspartnerschaft mbB

(56) Entgegenhaltungen:
- EP-A2- 2 151 400
- WO-A1-2008/038070
- CH-A- 459 061
- DE-T2-602004 005 586
- JP-A- H0 624 416
- JP-U- S5 911 833
- US-A- 4 623 056

## Beschreibung

Die Erfindung betrifft eine Weiche eines Tablettenablaufs einer Tablettenpresse, wobei eine Antriebseinrichtung vorgesehen ist zum Stellen der Weiche zwischen einer ersten Stellung, in der Tabletten einem ersten Auslasskanal der Weiche zugeleitet werden, und einer zweiten Stellung, in der Tabletten einem zweiten Auslasskanal der Weiche zugeleitet werden.

Rundläufertablettenpressen weisen eine Vielzahl von oberen und unteren Stempeln auf, die jeweils paarweise einer Kavität einer Matrizenscheibe eines Rotors der Rundläufertablettenpresse zugeordnet sind. Im Zuge der Drehung des Rotors werden die Kavitäten mit dem zu verpressenden Füllmaterial befüllt. In mindestens einer Druckeinrichtung werden die oberen und unteren Stempel in den Kavitäten zum Verpressen des Füllmaterials zu Tabletten gegeneinander gedrückt. Nach dem Verpressen werden die Tabletten in der Regel durch die Unterstempel aus den Kavitäten ausgestoßen und beispielsweise durch einen Abstreifer einem Tablettenablauf zugeführt. Die abgeführten Tabletten werden beispielsweise anhand von Messwerten einer Sensorik der Rundläufertablettenpresse unterschiedlichen Tablettenausgängen zugeleitet, beispielsweise Tablettenausgängen für Guttabletten, für Schlechttabletten oder für Tabletten eines Musterzugs. Zum Leiten der Tabletten in unterschiedliche Tablettenausgänge befinden sich in Tablettenabläufen von Rundläufertablettenpressen regelmäßig Weichen. Solche Weichen können zum Beispiel eine schwenkbar zwischen beispielsweise zwei Schaltstellungen bewegbare Weichenfahne aufweisen, die die Tabletten je nach Schaltstellung zu einem ersten Tablettenausgang oder einem zweiten Tablettenausgang leitet.

Entsprechend den hohen Produktionskapazitäten moderner Rundläufertablettenpressen fließt durch den Tablettenablauf ein erheblicher Strom von Tabletten. Dabei fließen die Tabletten regelmäßig mit nur geringem Abstand zwischen einander. Dies kann beim Schalten der Weiche in der Praxis zu einem Einklemmen von Tabletten zwischen der Weiche, beispielsweise dem freien Ende einer Weichenfahne, und einer gegenüberliegenden Wand des Tablettenablaufs führen. Dies wiederum kann zu einem Tablettenstau und zu einem Abschalten der Rundläufertablettenpresse aufgrund einer Weichenfehlfunktion führen. Dies schränkt die Verfügbarkeit der Rundläufertablettenpresse erheblich ein und der manuelle Aufwand für eine Bedienperson zum Beheben der Fehlfunktion ist hoch. So ist es für das Beheben eines Tablettenstaus erforderlich, das Gehäuse der Rundläufertablettenpresse zu öffnen, was insbesondere bei toxischen Pressmaterialien zu einem erhöhten Gesundheitsrisiko führt. Weiter ist regelmäßig eine Demontage von Komponenten, wie der Weichenantriebe, der Säule Luft, Abdeckungen etc. erforderlich, um den Bereich des Tablettenstaus zugänglich zu machen. Die gestauten Tabletten müssen entfernt werden, ebenso etwaige Bruchstücke und der Tablettenablauf muss gereinigt werden. Weiterhin muss geprüft werden, ob versehentlich Schlechttabletten oder Bruchstücke in die Gutproduktion gelangt sind. Anschließend müssen die demontierten Komponenten wieder montiert werden und die Rundläufertablettenpresse muss wieder in Betrieb genommen werden.

Neben dem Einklemmen von Tabletten und einer dadurch bewirkter Beschädigung bzw. einem Tablettenstau sind bekannte Weichen oftmals auch für sogenannte Mikrotabletten mit einem Durchmesser von weniger als 2 mm ungeeignet, da die beweglichen Weichenbleche mit benachbarten Bauteilen toleranzbedingt einen Spalt bilden, in dem sich kleine Tabletten unerwünscht verklemmen können.

Aus JP H06 24416 A ist eine Weiche gemäß dem Oberbegriff des Anspruchs 1 bekannt, nämlich zum Verteilen von beispielsweise Tabletten auf unterschiedliche Container. Ein S-förmiges Rohr ist schrittweise rotierbar über einem kreisringförmigen Behälter angeordnet. Der kreisringförmige Behälter ist durch Trennwände in mehrere Kammern aufgeteilt, die Auslässe zu verschiedenen Containern aufweisen. Das S-förmige Rohr dreht sich 2- mit seinem Auslassende über den Trennwänden.

Aus DE 60 2004 005586 T2 ist eine Vorrichtung zum Teilen eines Stroms von teilchenförmigem oder pulverförmigem Material in Teilströme bekannt. Die Vorrichtung besitzt ein Gehäuse mit einem Einlasskanal und mehreren Auslasskanälen, die aus separaten Öffnungen hervorgehen und mittels Scheidewänden getrennt sind, die sich radial bezüglich der Mittellinie des Einlasskanals erstrecken. Ein in unmittelbarer Verlängerung des Einlasskanals angebrachter Rotor weist eine Rotationsachse auf, die mit der Mittellinie des Einlasskanals zusammenfällt, wobei der Rotor eine radial ausgebildete Oberfläche aufweist, um den fallenden Materialstrom radial nach außen in einen oberhalb der Auslasskanäle angeordneten Raum zu führen, wobei die radialen Scheidewände in dem Raum um jeweils eine radiale Achse drehbar gelagert und somit in der Umfangsrichtung einstellbar sind.

Weitere Weichen mit rohrförmigen Kanälen sind bekannt aus CH 459 061 A, EP 2 151 400 A2, US 4 623 056 A und JP S59 11833 U. Eine Rundläufertablettenpresse mit einer Weiche ist darüber hinaus bekannt aus WO 2008/038 070 A1.

Ausgehend von dem erläuterten Stand der Technik liegt der Erfindung die Aufgabe zugrunde, eine Weiche der eingangs genannten Art bereitzustellen, mit der auch bei hohen Produktionskapazitäten die Verfügbarkeit der Tablettenpresse maximiert und der Aufwand und die Gesundheitsgefährdung für Bedienpersonen minimiert werden, und die insbesondere auch für sogenannte Mikrotabletten einsetzbar ist.

Die Erfindung löst die Aufgabe durch den Gegenstand des unabhängigen Anspruchs 1. Vorteilhafte Ausgestaltungen finden sich in den abhängigen Ansprüchen, der Beschreibung und den Figuren.

Für eine Weiche der eingangs genannten Art löst die Erfindung die Aufgabe dadurch, dass die Weiche einen mittels der Antriebseinrichtung zwischen der ersten Stellung und der zweiten Stellung verstellbaren rinnen- oder rohrförmigen Tablettenkanal mit einem Einlass und einem Auslass umfasst, wobei durch den rinnen- oder rohrförmigen Tablettenkanal geführte Tabletten in der ersten Stellung des rinnen- oder rohrförmigen Tablettenkanals dem ersten Auslasskanal zugeführt werden und in der zweiten Stellung des rinnen- oder rohrförmigen Tablettenkanals dem zweiten Auslasskanal zugeführt werden, und dass zwischen dem Auslass des rinnen- oder rohrförmigen Tablettenkanals und dem ersten und zweiten Auslasskanal eine einen Freiraum zwischen dem Auslass und dem ersten und zweiten Auslasskanal bildende Weichenkammer angeordnet ist, durch die Tabletten aus dem Auslass dem ersten oder zweiten Auslasskanal zugeführt werden.

Bei der Tablettenpresse kann es sich insbesondere um eine Rundläufertablettenpresse handeln. Die erfindungsgemäße Weiche weist einen mittels der Antriebseinrichtung zwischen der ersten Stellung und der zweiten Stellung verstellbaren rinnen- oder rohrförmigen Tablettenkanal mit einem Einlass und einem Auslass auf. Der Einlass und der Auslass des rinnen- oder rohrförmigen Tablettenkanals werden insbesondere durch seine beiden Enden gebildet. Bei dem Einlass kann es sich um einen Rohreinlass handeln. Bei dem Auslass kann es sich um einen Rohrauslass handeln. Zum Schalten der Weiche, und damit dem Leiten der Tabletten in den ersten oder zweiten Auslasskanal, wird der rinnen- oder rohrförmige Tablettenkanal zwischen einer ersten Stellung und einer zweiten Stellung verstellt, zum Beispiel gedreht. Der Einlass des rinnen- oder rohrförmigen Tablettenkanals kommuniziert in beiden Stellungen mit der Auswurfeinrichtung der Tablettenpresse, so dass in der Tablettenpresse hergestellte Tabletten in beiden Stellungen in den Einlass gelangen. In der ersten Stellung des rinnen- oder rohrförmigen Tablettenkanals kommuniziert der Auslass mit einem ersten Auslasskanal der Weiche. In dem rinnen- oder rohrförmigen Tablettenkanal geführte Tabletten werden also dem ersten Auslasskanal zugeführt. In der zweiten Stellung des rinnen- oder rohrförmigen Tablettenkanals kommuniziert der Auslass dagegen mit einem zweiten Auslasskanal der Weiche. In dem rinnen- oder rohrförmigen Tablettenkanal geführte Tabletten werden also dem zweiten Auslasskanal zugeführt. Die Tabletten können in der Weiche in an sich bekannter Weise mittels Schwerkraft gefördert werden. Der rinnen- oder rohrförmige Tablettenkanal besitzt insbesondere einen runden Querschnitt. Er kann beispielsweise einen elliptischen, kreisförmigen oder auch eckigen Querschnitt besitzen. Sofern es sich um einen rohrförmigen Tablettenkanal handelt, ist dieser insbesondere über seinen Umfang geschlossen. Sofern es sich um einen rinnenförmigen Tablettenkanal handelt, kann dieser an seiner Oberseite offen oder durch eine Abdeckung geschlossen sein. Der Querschnitt des Tablettenkanals kann über seine gesamte Längserstreckung gleich bleiben. Er könnte sich aber auch verändern.

Indem erfindungsgemäß ein verstellbarer rinnen- oder rohrförmiger Tablettenkanal mit einer konkaven Lauffläche für die Tabletten verwendet wird, wird ein Einklemmen von Tabletten und damit ein Zurückstoßen von Tabletten gegen den Tablettenstrom sowie ein Verkeilen von Tabletten mit Seitenwänden der Weiche sicher vermieden. Darüber hinaus suchen sich die geförderten Tabletten aus Schwerkraftgründen immer den tiefsten Punkt in der rinnen- oder rohrförmigen Laufrinne und laufen so geordnet hintereinander mit minimierter gegenseitiger Behinderung.

Erfindungsgemäß ist zwischen dem Auslass des rinnen- oder rohrförmigen Tablettenkanals und dem ersten und zweiten Auslasskanal weiterhin eine einen Freiraum zwischen dem Auslass und dem ersten und zweiten Auslasskanal bildende Weichenkammer angeordnet, durch die Tabletten aus dem Auslass dem ersten oder zweiten Auslasskanal zugeführt werden. Die Weichenkammer bildet in Fließrichtung der Tabletten einen Freiraum zwischen dem Rohrauslass und den Auslasskanälen. Der Rohrauslass und die Auslasskanäle sind also in Fließrichtung der Tabletten zueinander beabstandet, wobei dieser Abstand durch die Weichenkammer gewährleistet ist. Die Tabletten werden bei dem Schaltvorgang der Weiche entweder in den einen oder in den anderen Auslasskanal geleitet, wobei es aufgrund des durch die Weichenkammer gebildeten Freiraums während des Schaltvorgangs der Weiche nicht zu einem Zurückstoßen oder Einklemmen von Tabletten kommen kann. Die Gefahr eines Liegenbleibens oder Einklemmens sowie einer Beschädigung von Tabletten wird durch die erfindungsgemäße Weichenkammer weiter minimiert.

Die erfindungsgemäße Weiche eignet sich aufgrund ihrer Ausgestaltung dabei sowohl für große Tabletten als auch für sogenannte Mikrotabletten mit einem Durchmesser von weniger als 2 mm. Auch Tabletten mit in anderen Weichen problematischen Formen, wie zum Beispiel Tabletten mit geringer Steghöhe, können problemlos und sicher gefördert werden. Erreicht wird dies auch dadurch, dass bei der erfindungsgemäßen Weiche die Laufflächen der einzelnen Komponenten jeweils eine Überdeckung miteinander aufweisen.

Selbstverständlich könnte die erfindungsgemäße Weiche auch mehr als zwei Auslasskanäle, beispielsweise drei Auslasskanäle, umfassen, mit denen der rinnen- oder rohrförmige Tablettenkanal durch Verstellen, beispielsweise Drehen, wahlweise kommunizieren kann, so dass die Tabletten jeweils einem der Auslasskanäle zugeleitet werden.

Sämtliche Komponenten der erfindungsgemäßen Weiche können aus einem Metall, insbesondere einem Edelstahl, einem Kunststoff oder einer Keramik bestehen.

Gemäß einer Ausgestaltung kann vorgesehen sein, dass der rinnen- oder rohrförmige Tablettenkanal um eine Drehachse drehbar ist und der Einlass des rinnen- oder rohrförmigen Tablettenkanals koaxial zur Drehachse angeordnet ist und der Auslass nicht-koaxial zur Drehachse angeordnet ist Der Einlass ist koaxial bzw. konzentrisch zur Drehachse. Der Einlass verändert seine Position also bei der Drehung nicht. Er ist mit der Auswurfeinrichtung für in der Tablettenpresse hergestellte Tabletten verbunden. In der Tablettenpresse hergestellte Tabletten treten in den Einlass ein, und zwar in jeder Drehposition des rinnen- oder rohrförmigen Tablettenkanals. An den Einlass kann sich ein zum Beispiel bis zu einer ersten Krümmung entlang einer geraden Längsachse erstreckender Rohrabschnitt anschließen. Dessen Längsachse bildet dann die Drehachse des rinnen- oder rohrförmigen Tablettenkanals. Der Auslass ist dagegen nicht-koaxial bzw. exzentrisch zur Drehachse des rinnen- oder rohrförmigen Tablettenkanals angeordnet. Er verändert seine Position also mit Veränderung der Drehposition des rinnen- oder rohrförmigen Tablettenkanals. Insbesondere kann sich der Auslass vollständig außerhalb der Drehachse des rinnen- oder rohrförmigen Tablettenkanals befinden. Indem der rinnen- oder rohrförmige Tablettenkanal zum Schalten der Weiche gedreht wird, wird auch während des Umschaltvorgangs ein Stoßen von Tabletten an Flächen oder Kanten, insbesondere im rechten Winkel, vermieden. Vielmehr wird, ähnlich wie in einer Wasserrutsche, eine sanfte Richtungsumleitung für die Tabletten erreicht. Mechanische Belastungen der Tabletten sowie die Gefahr des Einklemmens und eines damit verbundenen Tablettenstaus werden minimiert.

Alternativ wäre es auch denkbar, dass der rinnen- oder rohrförmige Tablettenkanal zum Verstellen nicht gedreht, sondern anderweitig bewegt wird, zum Beispiel verschwenkt wird.

In der Weichenkammer ist gemäß einer weiteren Ausgestaltung eine Leiteinrichtung angeordnet, die aus dem Rohrauslass kommende Tabletten entweder dem ersten Auslasskanal oder dem zweiten Auslasskanal zuführt, je nach Lage des rohrförmigen Tablettenkanals. Eine solche Leiteinrichtung verbessert die Tablettenführung weiter.

Die Leiteinrichtung umfasst mindestens ein stationär in der Weichenkammer angeordnetes Leitelement. Das Leitelement kann zum Beispiel ein Leitblech sein. Das Leitelement kann zum Beispiel einen umgedreht V-förmigen Querschnitt besitzen, also mit nach oben zeigender Spitze des V. Die Tabletten werden dann durch die V-förmigen Flanken des Leitelements entweder in eine erste Seite der Weichenkammer oder in eine zweite Seite der Weichenkammer geleitet. Jede Seite der Weichenkammer führt zu einem der Auslasskanäle. Das Leitelement kann diese Seiten voneinander trennen. Dadurch erfolgt eine besonders sichere Aufteilung der Tabletten auf die Auslasskanäle.

Gemäß einer weiteren Ausgestaltung kann vorgesehen sein, dass die Leiteinrichtung mindestens einen zwischen einer aktiven Stellung und einer passiven Stellung in der Weichenkammer verstellbaren Leitkörper umfasst, wobei ein Leitkörperantrieb vorgesehen ist, der den Leitkörper während der Bewegung des rinnen- oder rohrförmigen Tablettenkanals zwischen der ersten und der zweiten Stellung in die passive Stellung verstellt. Der Antrieb des Leitkörpers kann durch einen eigenen Antrieb oder indirekt über die Verstellbewegung des rinnen- oder rohrförmigen Tablettenkanals erfolgen. Beispielsweise kann der Leitkörper einen Antriebsabschnitt umfassen, den der rinnen- oder rohrförmige Tablettenkanal bei seiner Verstellbewegung mitnimmt. Denkbar wäre zum Beispiel ein elastischer Antriebsabschnitt, der bei einer Verstellbewegung des rinnen- oder rohrförmigen Tablettenkanals in einer ersten Richtung unter Antreiben des Leitkörpers elastisch verformt wird, und der sich bei zurückbewegtem rinnen- oder rohrförmigem Abschnitt selbsttätig rückverformt und dabei den Leitkörper ebenfalls zurückverstellt. Der verstellbare Leitkörper befindet sich zum Beispiel standardmäßig in seiner aktiven Stellung, in der er die Auslasskanäle bzw. die Seiten der Weichenkammer voneinander trennt, so dass Tabletten nicht zwischen den zu den Auslasskanälen führenden Seiten der Weichenkammer wechseln können. Der Leitkörper wird während des Stellens der Weiche, also während der Verstellbewegung des rinnen- oder rohrförmigen Tablettenkanals, in eine passive Stellung verstellt, beispielsweise zumindest teilweise aus der Weichenkammer zurückgezogen. Dadurch wird die Bewegung des rinnen- oder rohrförmigen Tablettenkanals nicht gestört. Nach erfolgtem Stellen der Weiche wird der Leitkörper wieder in die aktive Stellung gebracht, beispielsweise wieder in die Weichenkammer eingeführt. Er kann zusätzlich oder alternativ zu einem stationären Leitelement, wie einem Leitblech, vorgesehen sein. Der Leitkörper bildet einen Trennkörper. Er kann zum Beispiel als Trennblech oder Trennplatte, wie Silikonplatte, ausgeführt sein. Der Leitkörper kann beispielsweise mittig zwischen den Auslasskanälen platziert sein und beim Schalten der Weiche weggeschwenkt werden. Der Leitkörper führt zu einer sichereren Trennung der Tabletten und damit Leiten in den gewünschten Auslasskanal, ohne dass es zu einer Störung des Bewegungsvorgangs des Tablettenkanals kommen kann. Der Leitkörperantrieb kann zum Beispiel einen Elektromotor, einen pneumatischen oder einen elektromagnetischen Antrieb umfassen.

Gemäß einer weiteren Ausgestaltung kann der erste Auslasskanal und/oder der zweite Auslasskanal rinnen- oder rohrförmig sein. Dies verbessert ein problemloses Abführen der Tabletten bei Minimierung der Gefahr von Beschädigungen, Einklemmen etc. weiter.

Der rinnen- oder rohrförmige Tablettenkanal kann gemäß einer besonderen praxisgemäßen Ausgestaltung durch ein gekrümmtes Rohr gebildet sein. Das Rohr kann zum Beispiel zweifach gekrümmt sein, so dass ein den Einlass bildender erster Rohrabschnitt versetzt, vorzugsweise parallel versetzt, zu einem den Auslass bildenden zweiten Rohrabschnitt verläuft. Der Tablettenkanal, insbesondere das gekrümmte Rohr, kann zum Beispiel aus Metall bestehen, beispielsweise einem Edelstahl.

Gemäß einer weiteren Ausgestaltung kann der Auslass in einer durch die Antriebseinrichtung drehend angetriebenen Drehscheibe ausgebildet sein. Die Drehscheibe weist dann eine zum Beispiel kreisförmige Öffnung auf, die den Auslass des rinnen- oder rohrförmigen Tablettenkanals bildet. Die kreisförmige Öffnung ist dann exzentrisch, insbesondere außerhalb der Drehachse der Drehscheibe angeordnet. An der Drehscheibe kann eine Antriebswelle angeordnet sein, zum Beispiel einstückig mit dieser verbunden sein, die von der Antriebseinrichtung gedreht wird.

Gemäß einer weiteren Ausgestaltung kann die Drehscheibe die Weichenkammer einseitig verschließen. Dies verhindert ein Abfließen von Tabletten in nicht gewünschte Bereiche.

Gemäß einer weiteren besonders praxisgemäßen Ausgestaltung kann die Antriebseinrichtung einen Elektromotor umfassen. Auch pneumatische oder elektromagnetische Antriebseinrichtungen sind denkbar.

Die Weiche kann weiterhin ein Gehäuse umfassen. Das Gehäuse kann zumindest abschnittsweise transparent sein, so dass der Tablettenablauf durch die Weiche visuell überprüft werden kann. Als Material für ein zumindest abschnittsweise transparentes Gehäuse kommt zum Beispiel transparenter Kunststoff, wie Plexiglas, infrage.

Die Erfindung betrifft auch eine Weichenanordnung, umfassend mehrere in Reihe angeordnete erfindungsgemäße Weichen. Ein Auslasskanal der in Fließrichtung der Tabletten ersten Weiche kann dann zu einem Einlass des rinnen- oder rohrförmigen Tablettenkanals der in Fließrichtung der Tabletten zweiten Weiche führen. Ein anderer Auslasskanal der in Fließrichtung der Tabletten ersten Weiche kann dann zum Beispiel zu einem Schlechtkanal für Schlechttabletten führen. Der erste und zweite Auslasskanal der in Fließrichtung der Tabletten zweiten Weiche können zum Beispiel einen Gutkanal für Guttabletten und einen Probenzugkanal zu einer Messanordnung für einen Probenzug bilden. So können zum Beispiel insgesamt drei Auslasskanäle bedient werden, einer für Guttabletten, einer für Schlechttabletten und einer für einen Probenzug. Sofern die Weichenanordnung mehrere Weichen umfasst, können diese in besonders praxisgemäßer Weise in einem gemeinsamen Gehäuse angeordnet sein.

Die Erfindung betrifft auch eine Rundläufertablettenpresse, umfassend einen mittels eines Drehantriebs drehbaren Rotor, wobei der Rotor eine obere Stempelführung für obere Stempel der Rundläufertablettenpresse und eine untere Stempelführung für untere Stempel der Rundläufertablettenpresse sowie eine zwischen den Stempelführungen angeordnete Matrizenschreibe aufweist, wobei die Stempel mit Kavitäten der Matrizenscheibe zusammenwirken, weiter umfassend eine Fülleinrichtung, durch die zu verpressendes Füllmaterial in die Kavitäten der Matrizenscheibe gefüllt wird, weiter umfassend mindestens eine obere Druckeinrichtung und mindestens eine untere Druckeinrichtung, die im Betrieb mit den oberen Stempeln und mit den unteren Stempeln zum Verpressen des Füllmaterials in den Kavitäten der Matrizenscheibe zu Tabletten zusammenwirken, weiter umfassend eine Auswurfeinrichtung, in der in den Kavitäten erzeugte Tabletten ausgeworfen werden, und umfassend einen Tablettenablauf, dem die ausgeworfenen Tabletten zugeführt werden, wobei in dem Tablettenablauf mindestens eine erfindungsgemäße Weiche angeordnet ist.

Ausführungsbeispiele der Erfindung werden nachfolgend anhand von Figuren näher erläutert. Es zeigen schematisch:
- Figur 1: eine erfindungsgemäße Rundläufertablettenpresse in einer abgewickelten Darstellung des Rotors,
- Figur 2: eine erfindungsgemäße Weiche für die in Figur 1 gezeigte Rundläufertablettenpresse in einer perspektivischen Ansicht,
- Figur 3: die Weiche aus Figur 2 in einer perspektivischen Explosionsdarstellung,
- Figur 4: die Weiche aus Figur 2 in einer Draufsicht,
- Figur 5: eine erfindungsgemäße Weichenanordnung für die in Figur 1 gezeigte Rundläufertablettenpresse in einer perspektivischen Ansicht, und
- Figur 6: die Weiche aus Figur 5 in einer teilweisen Explosionsdarstellung.

Soweit nichts anderes angegeben ist, bezeichnen in den Figuren gleiche Bezugszeichen gleiche Gegenstände.

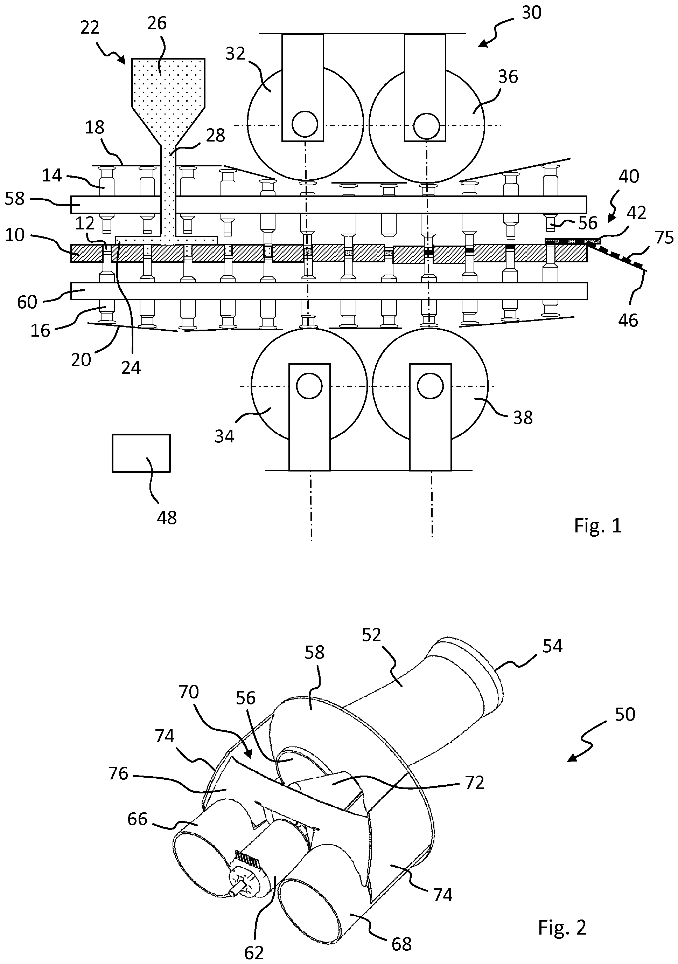

Die in Figur 1 gezeigte Rundläufertablettenpresse umfasst einen durch einen nicht näher dargestellten Drehantrieb drehend angetriebenen Rotor mit einer Matrizenscheibe 10, die eine Mehrzahl von Kavitäten 12 aufweist. Die Kavitäten 12 können beispielsweise durch Bohrungen der Matrizenscheibe 10 gebildet sein. Weiter umfasst der Rotor eine Mehrzahl von oberen Stempeln 14 und unteren Stempeln 16, die mit der Matrizenscheibe 10 synchron umlaufen. Jeweils ein Paar aus oberem Stempel 14 und unterem Stempel 16 ist dabei einer Kavität 12 zugeordnet. Die axiale Bewegung der oberen Stempel 14 und unteren Stempel 16 im Zuge der Drehung des Rotors wird durch obere Steuerkurvenelemente 18 und untere Steuerkurvenelemente 20 gesteuert. Die Rundläufertablettenpresse umfasst weiterhin eine Fülleinrichtung 22, die eine Füllkammer 24 aufweist. Die Fülleinrichtung 22 umfasst darüber hinaus ein trichterförmiges Füllmaterialreservoir 26, das über einen Zuführabschnitt 28 mit der Füllkammer 24 in Verbindung steht. Auf diese Weise gelangt in dem vorliegenden Beispiel pulverförmiges Füllmaterial aus dem Füllmaterialreservoir 26 über den Zuführabschnitt 28 schwerkraftbedingt in die Füllkammer 24 und aus dieser über eine an der Unterseite der Füllkammer 24 vorgesehene Befüllöffnung wiederum schwerkraftbedingt in die Kavitäten 12 der Matrizenscheibe 10.

Außerdem umfasst die Rundläufertablettenpresse eine Druckeinrichtung 30. Die Druckeinrichtung 30 besitzt eine Vordruckeinrichtung mit einer oberen Vordruckrolle 32 und einer unteren Vordruckrolle 34 sowie eine Hauptdruckeinrichtung mit einer oberen Hauptdruckrolle 36 und einer unteren Hauptdruckrolle 38. Darüber hinaus umfasst die Rundläufertablettenpresse eine Auswurfeinrichtung 40, vorliegend mit einem Abstreifer 42, der die in der Rundläuferpresse hergestellten Tabletten 75 einem Tablettenablauf 46 zuführt.

Eine Steuereinrichtung zum Betrieb der Rundläuferpresse ist bei dem Bezugszeichen 48 gezeigt. Die Steuereinrichtung 48 ist über nicht näher dargestellte Leitungen unter anderem mit dem Drehantrieb des Rotors verbunden.

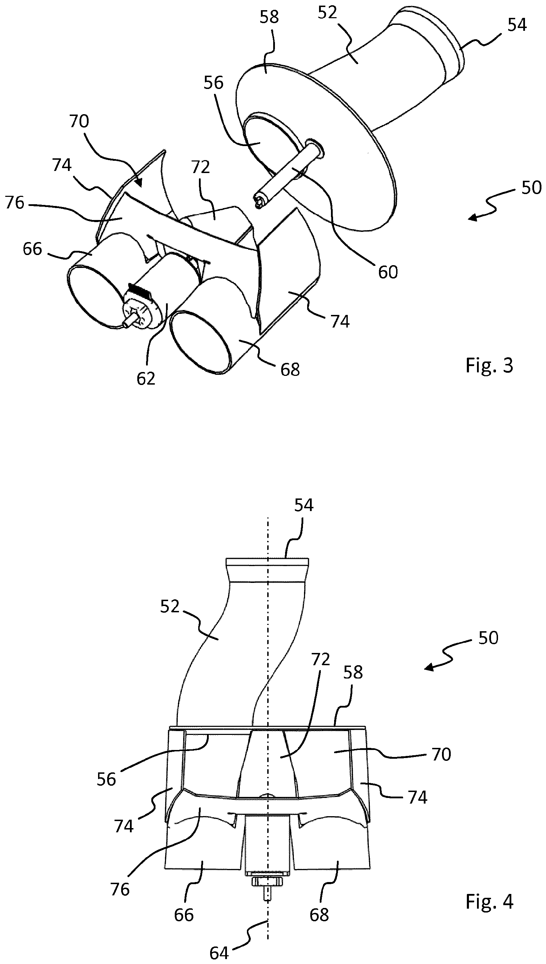

In dem Tablettenablauf 46 der in Figur 1 gezeigten Rundläufertablettenpresse kann nach einem ersten Ausführungsbeispiel die in den Figuren 2 bis 4 gezeigte Weiche 50 angeordnet sein. Die Weiche 50 umfasst einen in dem gezeigten Beispiel rohrförmigen Tablettenkanal 52 mit einem in dem gezeigten Beispiel kreisförmigen Querschnitt und zweifach gekrümmtem Verlauf, wie insbesondere in Figur 4 zu erkennen. Das erste Ende des rohrförmigen Tablettenkanals 52 bildet einen Einlass 54, vorliegend einen Rohreinlass 54. Das zweite Ende des rohrförmigen Tablettenkanals 52 bildet einen Auslass 56, vorliegend einen Rohrauslass 56. Der Einlass 54 und der Auslass 56 sind entsprechend dem Querschnitt des rohrförmigen Tablettenkanals 52 ebenfalls kreisförmig.

Wie in Figur 3 zu erkennen, ist der Auslass 56 an einer ebenfalls kreisförmigen Drehscheibe 58 ausgebildet. Im Kreismittelpunkt der Drehscheibe 58 ist an dieser eine Antriebswelle 60 angeordnet, deren in Figur 3 zu erkennendes freies Ende drehfest mit der Abtriebswelle eines Elektromotors 62 einer Antriebseinrichtung der Weiche 50 verbunden ist. Auf diese Weise kann die Drehscheibe 58, und mit ihr der rohrförmige Tablettenkanal 52 zum Stellen der Weiche 50 um eine in Figur 4 eingezeichnete Drehachse 64 gedreht werden. Dabei ist erkennbar, dass der den Einlass 54 bildende Rohrabschnitt, und damit auch der Einlass selbst, koaxial zu der Drehachse 64 liegen, während der den Auslass 56 bildende Rohrabschnitt, und damit auch der Auslass 56, exzentrisch zu der Drehachse 64, insbesondere vollständig außerhalb der Drehachse 64 liegen. Dadurch verändert der Einlass 54 bei einer Drehung des rohrförmigen Tablettenkanals 52 seine Position nicht, während der Auslass 56 um die Drehachse 64 herumgedreht wird, wie nachfolgend noch näher erläutert werden wird.

Die erfindungsgemäße Weiche umfasst außerdem einen ersten, in dem gezeigten Beispiel ebenfalls rohrförmigen Auslasskanal 66 mit kreisförmigem Querschnitt und einen zweiten, in dem gezeigten Beispiel ebenfalls rohrförmigen Auslasskanal 68 mit kreisförmigem Querschnitt. Der erste Auslasskanal 66 kann zum Beispiel zu einem Gutkanal für Guttabletten führen. Der zweite Auslasskanal 68 kann zum Beispiel zu einem Schlechtkanal für Schlechttabletten führen.

Zwischen dem Auslass 56 des rohrförmigen Tablettenkanals 52 und dem ersten und zweiten Auslasskanal 66, 68 ist eine Weichenkammer 70 ausgebildet. In der Weichenkammer 70 ist in dem gezeigten Beispiel ein stationäres Leitelement 72, in dem gezeigten Beispiel ein Leitblech 72, angeordnet. Das Leitelement 72 besitzt einen im Wesentlichen V-förmigen Querschnitt, wobei die Spitze des V in Figur 2 nach oben zeigt. Durch den rohrförmigen Tablettenkanal 52 geförderte Tabletten 75 gelangen über den Auslass 56 in die Weichenkammer 70 und von dort je nach Drehstellung des rohrförmigen Tablettenkanals 52 zu einem der beiden Auslasskanäle 66, 68. In der in Figur 2 gezeigten Stellung der Weiche gelangen die Tabletten 75 aus dem Auslass 56 in den ersten Auslasskanal 66. Das Leitelement 72 verhindert ein versehentliches Gelangen von Tabletten 75 in den zweiten Auslasskanal 68. Wird der rohrförmige Tablettenkanal 52 mittels des Elektromotors 62 dagegen in seine zweite Stellung gedreht, in Figur 2 im Uhrzeigersinn, befindet sich der Auslass 56 spiegelbildlich auf der anderen Seite des Leitelements 72. Durch den rohrförmigen Tablettenkanal 52 und den Auslass 56 in die Weichenkammer 70 geförderte Tabletten 75 werden nun in den zweiten Auslasskanal 68 geleitet, wobei das Leitelement 72 wiederum ein versehentliches Gelangen von Tabletten 75 in den ersten Auslasskanal 66 verhindert. In den Figuren sind außerdem seitliche Wände 74 und eine vordere Wand 76 zu erkennen, die die Weichenkammer 70 zu den Seiten und nach vorne begrenzen. Die rückwärtige Begrenzung der Weichenkammer 70 erfolgt in dem gezeigten Beispiel durch die Drehscheibe 58. Auch die in den Figuren offen gezeigte Oberseite der Weichenkammer 70 kann selbstverständlich durch ein entsprechendes Wandteil verschlossen werden. Das Ansteuern der Weiche 50 kann durch die Steuereinrichtung 48 erfolgen.

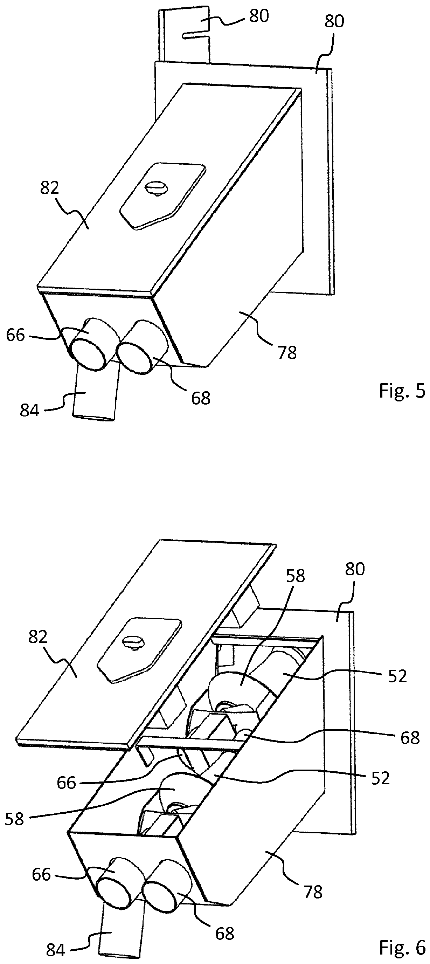

Anhand der Figuren 5 und 6 soll eine erfindungsgemäße Weichenanordnung erläutert werden, die in dem Tablettenablauf 46 der in Figur 1 gezeigten Rundläufertablettenpresse angeordnet werden kann. Die Weichenanordnung umfasst zwei in Reihe angeordnete Weichen 50, wie sie grundsätzlich in den Figuren 2 bis 4 gezeigt sind. Die beiden Weichen 50 sind in einem gemeinsamen Gehäuse 78 angeordnet. Das Gehäuse 78 besitzt einen Montageabschnitt 80, mit dem es beispielsweise an dem Pressengehäuse der in Figur 1 gezeigten Rundläufertablettenpresse montiert werden kann. Außerdem besitzt das Gehäuse 78 in dem gezeigten Beispiel einen transparenten Gehäusedeckel 82, beispielsweise aus Plexiglas. Durch zwei Öffnungen des Gehäuses 78 sind der erste und zweite Auslasskanal 66, 68 der in Fließrichtung der Tabletten 75 zweiten Weiche aus dem Gehäuse 78 geführt. Das Gehäuse 78 weist außerdem einen Abführkanal 84 auf zum Abführen von dem ersten Auslasskanal 66 der in Fließrichtung der Tabletten 75 ersten Weiche 50 zugeführten Tabletten. Dieser Abführkanal 84 kann beispielsweise als Schlechtkanal für Schlechttabletten genutzt werden.

Wie insbesondere in Figur 6 zu erkennen, führt der zweite Auslasskanal 68 der in Fließrichtung der Tabletten 75 ersten Weiche 50 zu dem Einlass 54 der in Fließrichtung der Tabletten 75 zweiten Weiche 50. Je nach Schaltstellung der in Fließrichtung der Tabletten 75 ersten Weiche 50 werden die Tabletten also über den ersten Auslass 66 dem Abführkanal 84 oder dem Einlass 54 der in Fließrichtung der Tabletten 75 zweiten Weiche 50 zugeführt. Je nach Schaltstellung der in Fließrichtung der Tabletten 75 zweiten Weiche werden die dieser zugeführten Tabletten 75 dann dem ersten Auslasskanal 66 oder dem zweiten Auslasskanal 68 dieser Weiche 50 zugeführt. Diese Auslasskanäle 66, 68 können dann beispielsweise zu einem Gutkanal für Guttabletten bzw. einem Probenzugkanal für eine stichprobeartige Entnahme von Tabletten 75 führen. Das Ansteuern der Weichenanordnung kann wiederum durch die Steuereinrichtung 48 erfolgen.

### Bezugszeichenliste

- 10: Matrizenscheibe
- 12: Kavitäten
- 14: Obere Stempel
- 16: Untere Stempel
- 18: Obere Steuerkurvenelemente
- 20: Untere Steuerkurvenelemente
- 22: Fülleinrichtung
- 24: Füllkammer
- 26: Füllmaterialreservoir
- 28: Zuführabschnitt
- 30: Druckeinrichtung
- 32: Obere Vordruckrolle
- 34: Untere Vordruckrolle
- 36: Obere Hauptdruckrolle
- 38: Untere Hauptdruckrolle
- 40: Auswurfeinrichtung
- 42: Abstreifer
- 46: Tablettenablauf
- 48: Steuereinrichtung
- 50: Weiche
- 52: Tablettenkanal
- 54: Einlass
- 56: Auslass
- 58: Drehscheibe
- 60: Antriebswelle
- 62: Elektromotor
- 64: Drehachse
- 66: Erster Auslasskanal
- 68: Zweiter Auslasskanal
- 70: Weichenkammer
- 72: Leitelement
- 74: Seitliche Wände
- 75: Tabletten
- 76: Vordere Wand
- 78: Gehäuse
- 80: Montageabschnitt
- 82: Gehäusedeckel
- 84: Abführkanal

## Patentansprüche

1. Weiche eines Tablettenablaufs (46) einer Tablettenpresse, umfassend eine Antriebseinrichtung zum Stellen der Weiche (50) zwischen einer ersten Stellung, in der Tabletten (75) einem ersten Auslasskanal (66) der Weiche (50) zugeleitet werden, und einer zweiten Stellung, in der Tabletten (75) einem zweiten Auslasskanal (68) der Weiche (50) zugeleitet werden, wobei die Weiche (50) einen mittels der Antriebseinrichtung zwischen der ersten Stellung und der zweiten Stellung verstellbaren rinnen- oder rohrförmigen Tablettenkanal (52) mit einem Einlass (54) und einem Auslass (56) umfasst, wobei durch den rinnen- oder rohrförmigen Tablettenkanal (52) geführte Tabletten (75) in der ersten Stellung des rinnen- oder rohrförmigen Tablettenkanals (52) dem ersten Auslasskanal (66) zugeführt werden und in der zweiten Stellung des rinnen- oder rohrförmigen Tablettenkanals (52) dem zweiten Auslasskanal (68) zugeführt werden, wobei zwischen dem Auslass (56) des rinnen- oder rohrförmigen Tablettenkanals (52) und dem ersten und zweiten Auslasskanal (66, 68) eine Weichenkammer (70) angeordnet ist, durch die Tabletten (75) aus dem Auslass (56) dem ersten oder zweiten Auslasskanal (66, 68) zugeführt werden, wobei die Weichenkammer (70) einen Freiraum zwischen dem Auslass (56) und dem ersten und zweiten Auslasskanal (66, 68) bildet, wobei in der Weichenkammer (70) eine Leiteinrichtung angeordnet ist, die aus dem Auslass (56) kommende Tabletten (75) entweder dem ersten Auslasskanal (66) oder dem zweiten Auslasskanal (68) zuführt, wobei die Leiteinrichtung ein stationär in der Weichenkammer (70) angeordnetes Leitelement (72) umfasst, **dadurch gekennzeichnet, dass** die Laufflächen des Leitelements (72) und des rinnen- oder rohrförmigen Tablettenkanals (52) eine Überdeckung miteinander aufweisen, so dass es während des Schaltvorgangs der Weiche nicht zu einem Zurückstoßen oder Einklemmen von Tabletten kommen kann.

2. Weiche nach Anspruch 1, **dadurch gekennzeichnet, dass** der rinnen- oder rohrförmige Tablettenkanal um eine Drehachse (64) drehbar ist und der Einlass (54) des rinnen- oder rohrförmigen Tablettenkanals (52) koaxial zur Drehachse (64) angeordnet ist und der Auslass (56) nicht-koaxial zur Drehachse (64) angeordnet ist.

3. Weiche nach einem der vorhergehenden Ansprüche, **dadurch gekennzeichnet, dass** das Leitelement (72) einen umgedreht V-förmigen Querschnitt besitzt.

4. Weiche nach einem der vorhergehenden Ansprüche, **dadurch gekennzeichnet, dass** die Laufflächen der Weichenkammer (70) und des rinnen- oder rohrförmigen Tablettenkanals (52) eine Überdeckung miteinander aufweisen und/oder dass die Laufflächen der Weichenkammer (70) und des ersten und zweiten Auslasskanals (66, 68) eine Überdeckung miteinander aufweisen.

5. Weiche nach einem der vorhergehenden Ansprüche, **dadurch gekennzeichnet, dass** die Leiteinrichtung mindestens einen zwischen einer aktiven Stellung und einer passiven Stellung in der Weichenkammer (70) verstellbaren Leitkörper umfasst, wobei ein Leitkörperantrieb vorgesehen ist, der den Leitkörper während der Bewegung des rinnen- oder rohrförmigen Tablettenkanals (52) zwischen der ersten und der zweiten Stellung in die passive Stellung verstellt.

6. Weiche nach einem der vorhergehenden Ansprüche, **dadurch gekennzeichnet, dass** der erste Auslasskanal (66) und/oder der zweite Auslasskanal (68) rinnen- oder rohrförmig ist.

7. Weiche nach einem der vorhergehenden Ansprüche, **dadurch gekennzeichnet, dass** der rinnen- oder rohrförmige Tablettenkanal (52) durch ein gekrümmtes Rohr gebildet ist.

8. Weiche nach den Ansprüchen 2 und 7, **dadurch gekennzeichnet, dass** der Auslass (56) in einer durch die Antriebseinrichtung drehend angetriebenen Drehscheibe (58) ausgebildet ist.

9. Weiche nach Anspruch 8, **dadurch gekennzeichnet, dass** die Drehscheibe (58) die Weichenkammer (70) einseitig verschließt.

10. Weiche nach einem der vorhergehenden Ansprüche, **dadurch gekennzeichnet, dass** die Antriebseinrichtung einen Elektromotor (62), einen pneumatischen Antrieb oder einen elektromagnetischen Antrieb umfasst.

11. Weiche nach einem der vorhergehenden Ansprüche, **dadurch gekennzeichnet, dass** sie weiterhin ein Gehäuse (78) umfasst.

12. Weichenanordnung, **dadurch gekennzeichnet, dass** sie mehrere in Reihe angeordnete Weichen (50) nach einem der vorhergehenden Ansprüche umfasst.

13. Weichenanordnung nach Anspruch 12, **dadurch gekennzeichnet, dass** die Weichen (50) in einem gemeinsamen Gehäuse (78) angeordnet sind.

14. Rundläufertablettenpresse, umfassend einen mittels eines Drehantriebs drehbaren Rotor, wobei der Rotor eine obere Stempelführung für obere Stempel (14) der Rundläufertablettenpresse und eine untere Stempelführung für untere Stempel (16) der Rundläufertablettenpresse sowie eine zwischen den Stempelführungen angeordnete Matrizenscheibe aufweist, wobei die Stempel (14, 16) mit Kavitäten (12) der Matrizenscheibe (10) zusammenwirken, weiter umfassend eine Fülleinrichtung (22), durch die zu verpressendes Füllmaterial in die Kavitäten (12) der Matrizenscheibe (10) gefüllt wird, weiter umfassend mindestens eine obere Druckeinrichtung (30) und mindestens eine untere Druckeinrichtung (30), die im Betrieb mit den oberen Stempeln (14) und mit den unteren Stempeln (16) zum Verpressen des Füllmaterials in den Kavitäten (12) der Matrizenscheibe (10) zu Tabletten (75) zusammenwirken, weiter umfassend eine Auswurfeinrichtung (40), in der in den Kavitäten (12) erzeugte Tabletten (75) ausgeworfen werden, und umfassend einen Tablettenablauf (46), dem die ausgeworfenen Tabletten (75) zugeführt werden, **dadurch gekennzeichnet, dass** in dem Tablettenablauf (46) mindestens eine Weiche (50) nach einem der Ansprüche 1 bis 11 angeordnet ist.

## Claims

1. A switch for a tablet discharge (46) of a tablet press, comprising a drive apparatus for moving the switch (50) between a first position in which tablets (75) are supplied to a first outlet channel (66) of the switch (50), and a second position in which tablets (75) are supplied to a second outlet channel (68) of the switch (50), wherein the switch (50) comprises a trough-shaped or tube-shaped tablet channel (52) that is adjustable by means of the drive apparatus between the first position and the second position and has an inlet (54) and an outlet (56), wherein tablets (75) guided through the trough-shaped or tube-shaped tablet channel (52) are fed to the first outlet channel (66) in the first position of the trough-shaped or tube-shaped tablet channel (52), and fed to the second outlet channel (68) in the second position of the trough-shaped or tube-shaped tablet channel (52), wherein a switch chamber (70) is arranged between the outlet (56) of the trough-shaped or tube-shaped tablet channel (52) and the first and second outlet channel (66, 68) through which tablets (75) from the outlet (56) are fed to the first or second outlet channel (66, 68), wherein the switch chamber (70) forms a gap between the outlet (56) and the first and second outlet channel (66, 68),
wherein a guiding apparatus is arranged in the switch chamber (70) which feeds tablets (75) coming from the outlet (56) either to the first outlet channel (66) or the second outlet channel (68), wherein the guiding apparatus comprises a guiding element (72) arranged in a stationary manner in the switch chamber (70), **characterized in that** the running surfaces of the guiding element (72) and of the trough-shaped or tube-shaped tablet channel (52) have an overlap with each other such that tablets cannot push back or clamp during the switching operation of the switch.

2. The switch according to Claim 1, **characterized in that** the trough-shaped or tube-shaped tablet channel can rotate about a rotary axis (64), and the inlet (54) of the trough-shaped or tube-shaped tablet channel (52) is arranged coaxially to the rotary axis (64) and the outlet (56) is arranged non-coaxially to the rotary axis (64).

3. The switch according to any one of the preceding claims, **characterized in that** the guiding element (72) has an inverted V-shaped cross-section.

4. The switch according to any one of the preceding claims, **characterized in that** the running surfaces of the switch chamber (70) and of the trough-shaped or tube-shaped tablet channel (52) have an overlap with each other and/or the running surfaces of the switch chamber (70) and of the first and second outlet channel (66, 68) have an overlap with each other.

5. The switch according to any one of the preceding claims, **characterized in that** the guiding apparatus comprises at least one guide body that can be adjusted between an active position and a passive position in the switch chamber (70), wherein a guide body drive is provided that adjusts the guide body during the movement of the trough-shaped or tube-shaped tablet channel (52) between the first and the second position into the passive position.

6. The switch according to any one of the preceding claims, **characterized in that** the first outlet channel (66) and/or the second outlet channel (68) is trough-shaped or tube-shaped.

7. The switch according to any one of the preceding claims, **characterized in that** the trough-shaped or tube-shaped tablet channel (52) is formed by a curved tube.

8. The switch according to Claims 2 and 7, **characterized in that** the outlet (56) is configured in a rotary disk (58) rotatingly driven by the drive apparatus.

9. The switch according to Claim 8, **characterized in that** the rotary disk (58) seals the switch chamber (70) on one side.

10. The switch according to any one of the preceding claims, **characterized in that** the drive apparatus comprises an electric motor (62), a pneumatic drive or an electromagnetic drive.

11. The switch according to any one of the preceding claims, **characterized in that** it further comprises a housing (78).

12. A switch arrangement, **characterized in that** it comprises several switches (50) according to any one of the preceding claims that are arranged in a row.

13. The switch arrangement according to Claim 12, **characterized in that** the switches (50) are arranged in a common housing (78).

14. A rotary tablet press comprising a rotor that can be rotated by means of a rotary drive, wherein the rotor has an upper punch guide for upper punches (14) of the rotary tablet press and a lower punch guide for lower punches (16) of the rotary tablet press as well as a die plate arranged between the punch guides, wherein the punches (14, 16) interact with cavities (12) in the die plate (10), furthermore comprising a filling apparatus (22), by means of which filling material to be pressed is added to the cavities (12) in the die plate (10), furthermore comprising at least one upper pressing apparatus (30) and at least one lower pressing apparatus (30) that, during operation, interact with the upper punches (14) and the lower punches (16) to press the filling material into tablets (75) in the cavities (12) in the die plate (10), moreover comprising an ejection apparatus (40) in which tablets (75) generated in the cavities (12) are ejected, and comprising a tablet discharge (46) that is fed the ejected tablets (75), **characterized in that** at least one switch (50) according to any one of Claims 1 to 11 is arranged in the tablet discharge (46).

## Revendications

1. Aiguillage d'un dispositif de déchargement de comprimés (46) d'une presse à comprimés, comportant un système d'entraînement pour le positionnement de l'aiguillage (50) entre une première position, dans laquelle des comprimés (75) sont alimentés vers un premier canal de sortie (66) de l'aiguillage (50), et une deuxième position dans laquelle des comprimés (75) sont alimentés vers un deuxième canal de sortie (68) de l'aiguillage (50), dans lequel l'aiguillage (50) comporte un canal à comprimés en forme de goulotte ou de tube (52) avec une entrée (54) et une sortie (56), lequel peut être déplacé entre la première position et la deuxième position au moyen du système d'entraînement, dans lequel des comprimés (75) guidés à travers le canal à comprimés en forme de goulotte ou de tube (52) sont alimentés vers le premier canal de sortie (66) dans la première position du canal à comprimés en forme de goulotte ou de tube (52) et sont alimentés vers le deuxième canal de sortie (68) dans la deuxième position du canal à comprimés en forme de goulotte ou de tube (52), dans lequel une chambre d'aiguillage (70) est disposée entre la sortie (56) du canal à comprimés en forme de goulotte ou de tube (52) et les premier et deuxième canaux de sortie (66, 68), à travers laquelle des comprimés (75) sont alimentés vers le premier ou le deuxième canal de sortie (66, 68) à partir de la sortie (56), dans lequel la chambre d'aiguillage (70) forme un espace libre entre la sortie (56) et les premier et deuxième canaux de sortie (66, 68),
dans lequel un système de guidage est disposé dans la chambre d'aiguillage (70), lequel alimente des comprimés (75) venant de la sortie (56) soit vers le premier canal de sortie (66), soit vers le deuxième canal de sortie (68), dans lequel le système de guidage comporte un élément de guidage (72) disposé de façon stationnaire dans la chambre d'aiguillage (70), **caractérisé en ce que** les surfaces de roulement de l'élément de guidage (72) et du canal à comprimés en forme de goulotte ou de tube (52) présentent conjointement un recouvrement, de manière à empêcher un reflux ou un blocage de comprimés pendant l'opération de commutation de l'aiguillage.

2. Aiguillage selon la revendication 1, **caractérisé en ce que** le canal à comprimés en forme de goulotte ou de tube peut tourner autour d'un axe de rotation (64) et l'entrée (54) du canal à comprimés en forme de goulotte ou de tube (52) est disposée de façon coaxiale par rapport à l'axe de rotation (64) et la sortie (56) est disposée de façon non coaxiale par rapport à l'axe de rotation (64).

3. Aiguillage selon l'une des revendications précédentes, **caractérisé en ce que** l'élément de guidage (72) possède une section transversale en forme de V inversé.

4. Aiguillage selon l'une des revendications précédentes, **caractérisé en ce que** les surfaces de roulement de la chambre d'aiguillage (70) et du canal à comprimés en forme de goulotte ou de tube (52) présentent conjointement un recouvrement et/ou **en ce que** les surfaces de roulement de la chambre d'aiguillage (70) et des premier et deuxième canaux de sortie (66, 68) présentent conjointement un recouvrement.

5. Aiguillage selon l'une des revendications précédentes, **caractérisé en ce que** le système de guidage comporte au moins un corps de guidage déplaçable entre une position active et une position passive dans la chambre d'aiguillage (70), dans lequel il est prévu un entraînement de corps de guidage déplaçant le corps de guidage vers la position passive pendant le mouvement du canal à comprimés en forme de goulotte ou de tube (52) entre la première et la deuxième position.

6. Aiguillage selon l'une des revendications précédentes, **caractérisé en ce que** le premier canal de sortie (66) et/ou le deuxième canal de sortie (68) est en forme de goulotte ou de tube.

7. Aiguillage selon l'une des revendications précédentes, **caractérisé en ce que** le canal à comprimés en forme de goulotte ou de tube (52) est formé par un tube incurvé.

8. Aiguillage selon les revendications 2 et 7, **caractérisé en ce que** la sortie (56) est formée dans un disque rotatif (58) entraîné en rotation par le système d'entraînement.

9. Aiguillage selon la revendication 8, **caractérisé en ce que** le disque rotatif (58) ferme la chambre d'aiguillage (70) sur un côté.

10. Aiguillage selon l'une des revendications précédentes, **caractérisé en ce que** le système d'entraînement comporte un moteur électrique (62), un entraînement pneumatique ou un entraînement électromagnétique.

11. Aiguillage selon l'une des revendications précédentes, **caractérisé en ce qu'**il comporte également un boîtier (78).

12. Ensemble d'aiguillage, **caractérisé en ce qu'**il comporte plusieurs aiguillages (50) selon l'une des revendications précédentes, disposés en série.

13. Ensemble d'aiguillage selon la revendication 12, **caractérisé en ce que** les aiguillages (50) sont disposées dans un boîtier (78) commun.

14. Presse rotative pour comprimés, comportant un rotor apte à être mis en rotation par un entraînement rotatif, dans laquelle le rotor présente un guide de poinçons supérieur pour des poinçons supérieurs (14) de la presse rotative pour comprimés et un guide de poinçons inférieur pour des poinçons inférieurs (16) de la presse rotative pour comprimés, ainsi qu'un disque à matrice disposé entre les guides de poinçons, dans laquelle les poinçons (14, 16) coopèrent avec des cavités (12) du disque à matrice (10), comportant en outre un système de remplissage (22) par le biais duquel un matériau de remplissage à comprimer est introduit dans les cavités (12) du disque à matrice (10), comportant en outre au moins un système de pression supérieur (30) et au moins un système de pression inférieur (30) coopérant avec les poinçons supérieurs (14) et avec les poinçons inférieurs (16) pendant le fonctionnement pour presser le matériau de remplissage dans les cavités (12) du disque à matrice (10) de manière à former des comprimés (75), comportant en outre un système d'éjection (40) dans lequel des comprimés (75) fabriqués dans les cavités (12) sont éjectés, et comportant un dispositif de déchargement de comprimés (46) vers lequel sont alimentés les comprimés (75) éjectés, **caractérisé en ce qu'**au moins un aiguillage (50) selon l'une des revendications 1 à 11 est disposé dans le dispositif de déchargement de comprimés (46).
